# EUROPÄISCHE PATENTSCHRIFT

(11) **EP 1 849 955 B1**
(45) Veröffentlichungstag und Bekanntmachung des Hinweises auf die Patenterteilung: **17.06.2009**
(21) Anmeldenummer: 07106506.4
(22) Anmeldetag: 19.04.2007
(51) Int. Cl.: E21B 10/44, B23B 51/02

(54) **Drehschlagbohrer mit viergängigem Bohrwendelschaft**
Rotary percussion drill bit with a four-groove drill helix shaft
Forêt de percussion avec une tige hélicoïdale à quatre rainures

(30) Priorität: 28.04.2006 DE 102006000208
(43) Veröffentlichungstag der Anmeldung: 31.10.2007
(73) Patentinhaber: HILTI Aktiengesellschaft, 9494 Schaan (LI)
(72) Erfinder: Koch, Olaf, 86916, Kaufering (DE); Starkmann, Josef, 86857, Hurlach (DE); Domani, Günther, 6820, Frastanz (AT)
(74) Vertreter: Wildi, Roland

(56) Entgegenhaltungen:
- DE-A1- 19 915 304
- DE-U1- 9 319 009
- US-A- 2 895 355
- US-A- 4 749 051

## Beschreibung

Die Erfindung bezeichnet einen Drehschlagbohrer für Gestein, vorzugsweise im Durchmesserbereich von 3 mm bis 45 mm für die Verwendung in drehschlagenden Handwerkzeugmaschinen, mit einem viergängigen Bohrwendelschaft.

Derartige viergängige Bohrwendelschäfte von Drehschlagbohrern bilden üblicherweise im Wendelquerschnitt eine vierzählige Rotations- und Spiegelsymmetrie aus, wobei nach der DE4419641 die vom konkav ausgeformten Nutengrund radial auskragenden einzelnen Wendelstege sich nach radial aussen verjüngen, bzw. nach der US2673716 gleich breit bleiben.

Nach der US4749051 ist ein viergängiger Bohrwendelschaft mit einem Wendelquerschnitt mit vierzähliger Rotations- und Spiegelsymmetrie vorbekannt, bei welchen die vom konkav ausgeformten Nutengrund radial auskragenden Wendelstege in einen Hüllkreisbogen des Wendeldurchmessers übergehen.

Nach der DE2895355 ist ein viergängiger Wendelschaft einer Bohrstange mit einem Wendelquerschnitt mit vierzähliger Rotations- und Spiegelsymmetrie mit vom konvex ausgeformten Nutengrund bis zu einem Hüllkreisradius auskragenden, konvex kreisbogenförmigen Wendelstegen vorbekannt, welche nach der DE206517 elliptisch geformt sind und zusätzlich bezüglich ihrer Stegbreite einen Hinterschnitt ausbilden.

Die konkrete Wendelquerschnittsgeometrie des Bohrwendelschafts hat einen wesentlichen Einfluss auf das Eigenschaftsspektrum eines Drehschlagbohrers, welcher gerade bei der Verwendung in handgehaltenen Handwerkzeugmaschinen vielfältigen Anforderungen genügen muss. Ohne dies abschliessend aufzuzählen muss bei gegebenen Randbedingungen (bspw. Wendeldurchmesser, Schlagenergie, Drehmoment, Biegemoment, Bohrmaterial) der zweckentsprechenden Verwendung somit bspw. die Masse, die Förderleistung, der Reibwert, die Bruchfestigkeit, die akustische Impedanz, die Torsionssteifigkeit und der Mittelwert sowie die umlaufende Variation der Biegesteifigkeit aufeinander abgestimmt werden.

Die Aufgabe der Erfindung besteht in der Realisierung eines viergängigen Bohrwendelschafts eines Schlagbohrers mit einem für die Verwendung mit einer Handwerkzeugmaschine optimierten Eigenschaftsspektrum.

Die Aufgabe wird im Wesentlichen durch die Merkmale des Anspruchs 1 gelöst. Vorteilhafte Weiterbildungen ergeben sich aus den Unteransprüchen.

So weist ein Drehschlagbohrer für Gestein mit einem viergängigen Bohrwendelschaft einen vierzählig rotations- und spiegelsymmetrischen Wendelquerschnitt auf, in welchen die vom Nutengrund bis zu einem Hüllkreisradius radial auskragenden Wendelstege konvex ausgebildet sind und bezüglich ihrer Stegbreite einen Hinterschnitt ausbilden, wobei der Nutengrund konkav ausgebildet ist.

Der Hinterschnitt zwischen dem konkaven Nutengrund und dem konvexen Wendelsteg führt neben der Vergrösserung der Wendelgangquerschnittsfläche bei der Integration über den Querschnitt im äusseren Radialbereich zu einem lokalen Maxima des Integrationsbeitrags, der überproportional (mit dem Quadrat des Radius) in die verschiedenen Flächenträgheitsmomente eingeht und somit die Torsions- und Biegefestigkeitswerte überproportional erhöht. Dadurch kann die Querschnittsfläche und somit die Masse reduziert werden, wodurch Gewicht und Material dieses Massenprodukts eingespart wird.

Vorteilhaft weist ein in den Wendelquerschnitt einschreibbarer Innenkreis einen Innenkreisradius von einem Drittel bis zwei Dritteln, weiter vorteilhaft der Hälfte, des Hüllkreisradius auf, wodurch eine hinreichend gute Schlagenergieübertragung erzielt ist.

Vorteilhaft ist der Hinterschnitt an einen Hinterschnittradius im Bereich von der Hälfte bis zwei Dritteln, weiter vorteilhaft bei drei Viertel, des Hüllkreisradius angeordnet, wodurch die Wendelgangquerschnittsfläche geeignet vergrössert wird.

Vorteilhaft weist im Wendelquerschnitt der Nutengrund einen Nutengrundradius im Bereich von einem Drittel bis zwei Dritteln, weiter vorteilhaft der Hälfte, des Hüllkreisradius auf, wodurch ein gering gekrümmter Wendelgang ausgebildet wird, an dem das zu fördernde, abgetragene Bohrklein schlecht anhaftet.

Vorteilhaft liegt im Wendelquerschnitt eine radial äussere Randbreite des Wendelstegs im Bereich von einem Achtel bis zu einem Sechstel des Hüllkreisradius, wodurch bei vertretbarer Reibung eine hinreichende Führung des Bohrwendels an der Bohrlochwandung erzielt wird.

Vorteilhaft geht im Wendelquerschnitt der Wendelsteg radial aussen in einen Hüllkreisbogen über, wodurch eine nicht abrasiv wirkende, flächig anliegende Führung des Bohrwendels an der Bohrlochwandung erzielt wird.

Vorteilhaft ist im Wendelquerschnitt zwischen dem konkav ausgeformten Nutengrund und dem Hüllkreisbogen ein konvex ausgeformter Flankenrand ausgebildet, wodurch eine scharfe Kanten im Bohrwendel ausbildende umlaufende Randkrümmungsänderung vermindert wird.

Vorteilhaft geht im Wendelquerschnitt der Nutengrund glatt (ohne Knick) in den Flankenrand über, wodurch Sollbruchstellen an Innenkanten vermieden werden und somit die Bruchfestigkeit des Bohrwendels steigt.

Vorteilhaft weist im Wendelquerschnitt der Flankenrand einen Flankenrandradius im Bereich von einem Viertel bis der Hälfte, weiter vorteilhaft einem Dritteln, des Hüllkreisradius auf, wodurch bei hinreichender Stegbreite des Wendelstegs am Hinterschnitt radial aussen eine Randbreite verbleibt, deren Reibung an der Bohrlochwandung vertretbar ist.

Vorteilhaft liegt eine zur Bohrachse bestimmte Wendelsteigung des Wendelsteges im Bereich von 45° bis 55°, weiter vorteilhaft bei 48°, wodurch ohne partielles Verstopfen des Wendelgangs eine hohe Fördergeschwindigkeit des Bohrkleins erzielt wird.

Die Erfindung wird bezüglich eines vorteilhaften Ausführungsbeispiels näher erläutert mit:
Fig. 1 als Drehschlagbohrer
Fig. 2 als Wendelquerschnitt

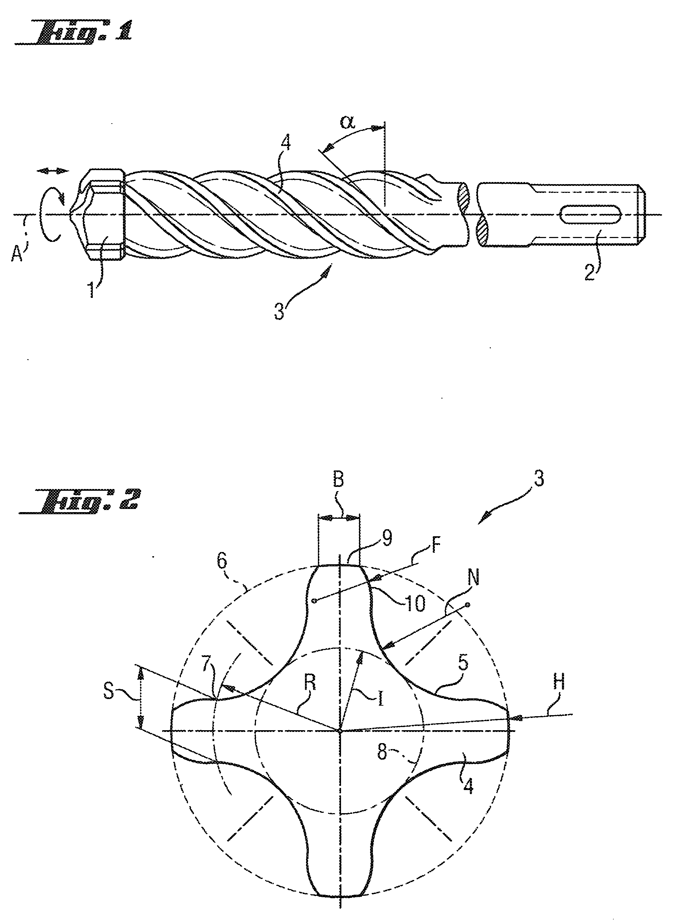

Nach Fig. 1 weist ein Drehschlagbohrer für Gestein einen axial zwischen einem hartstoffbestückten Bohrkopf 1, in Form eines stumpf angelöteten Vollhartstoffkopfes, und einem Einsteckende 2 angeordneten viergängigen Bohrwendelschaft 3 mit vier Wendelstegen 4 auf, die jeweils eine zur Bohrachse A bestimmte Wendelsteigung [alpha] der Wendelstege 4 von 48° aufweisen.

Nach Fig. 2 ist der Wendelquerschnitt vierzählig rotations- und spiegelsymmetrisch, wobei die von einem Nutengrund 5 bis zu einem Hüllkreis 6 mit dem Hüllkreisradius H radial auskragenden Wendelstege 4 konvex ausgebildet sind und bezüglich ihrer Stegbreite S einen Hinterschnitt 7 ausbilden. Ein in den Wendelquerschnitt einschreibbarer Innenkreis 8 weist einen Innenkreisradius I von der Hälfte des Hüllkreisradius H auf. Der Hinterschnitt 7 ist an einen Hinterschnittradius R bei drei Viertel des Hüllkreisradius H angeordnet. Der konkav geformte Nutengrund 5 weist einen Nutengrundradius N von der Hälfte des Hüllkreisradius H auf. Eine radial äussere Randbreite B des Wendelstegs 4 liegt bei einem Siebentel des Hüllkreisradius H, wobei der Wendelsteg 4 in einen Hüllkreisbogen 9 übergeht. Zwischen dem konkav ausgeformten Nutengrund 5 und dem Hüllkreisbogen 9 ist ein konvex ausgeformter Flankenrand 10 ausgebildet, der glatt in den Nutengrund 5 übergeht. Der Flankenrand 10 weist einen Flankenrandradius F von einem Drittel des Hüllkreisradius H auf.

## Patentansprüche

1. Drehschlagbohrer für Gestein mit einem viergängigen Bohrwendelschaft (3) mit einem vierzählig rotations- und spiegelsymmetrischen Wendelquerschnitt, in welchen die vom Nutengrund (5) bis zu einem Hüllkreisradius (H) radial auskragenden Wendelstege (4) konvex ausgebildet sind und bezüglich ihrer Stegbreite (S) einen Hinterschnitt (7) ausbilden, **dadurch gekennzeichnet, dass** der Nutengrund (5) konkav ausgebildet ist.

2. Drehschlagbohrer nach Anspruch 1, **dadurch gekennzeichnet, dass** ein in den Wendelquerschnitt einschreibbarer Innenkreis (8) einen Innenkreisradius (I) von einem Drittel bis zwei Dritteln des Hüllkreisradius (H) aufweist.

3. Drehschlagbohrer nach Anspruch 1 oder 2, **dadurch gekennzeichnet, dass** der Hinterschnitt an einen Hinterschnittradius (R) im Bereich von der Hälfte bis zwei Dritteln des Hüllkreisradius (H) angeordnet ist.

4. Drehschlagbohrer nach einem der Ansprüche 1 bis 3, **dadurch gekennzeichnet, dass** im Wendelquerschnitt der Nutengrund (5) einen Nutengrundradius (N) im Bereich von einem Drittel bis zwei Dritteln des Hüllkreisradius (H) aufweist.

5. Drehschlagbohrer nach einem der Ansprüche 1 bis 4, **dadurch gekennzeichnet, dass** im Wendelquerschnitt eine radial äussere Randbreite (B) des Wendelstegs (4) im Bereich von einem Achtel bis zu einem Sechstel des Hüllkreisradius (H) liegt.

6. Drehschlagbohrer nach einem der Ansprüche 1 bis 5, **dadurch gekennzeichnet, dass** im Wendelquerschnitt der Wendelsteg (4) radial aussen in einen Hüllkreisbogen (9) übergeht.

7. Drehschlagbohrer nach Anspruch 6, **dadurch gekennzeichnet, dass** im Wendelquerschnitt zwischen dem konkav ausgeformten Nutengrund (5) und dem Hüllkreisbogen (9) ein konvex ausgeformter Flankenrand (10) ausgebildet ist.

8. Drehschlagbohrer nach Anspruch 7, **dadurch gekennzeichnet, dass** im Wendelquerschnitt der Nutengrund (5) glatt in den Flankenrand (10) übergeht.

9. Drehschlagbohrer nach Anspruch 6 oder 7, **dadurch gekennzeichnet, dass** im Wendelquerschnitt der Flankenrand (10) einen Flankenrandradius (F) im Bereich von einem Viertel bis der Hälfte des Hüllkreisradius (H) aufweist.

10. Drehschlagbohrer einem der Ansprüche 1 bis 9, **dadurch gekennzeichnet, dass** eine zur Bohrachse (A) bestimmte Wendelsteigung ([alpha]) des Wendelsteges (4) im Bereich von 45° bis 55° liegt.

## Claims

1. Rotary percussion drill bit for rock with a four-groove drill helix shaft (3) with a helix cross section, which has quadruple rotational symmetric and mirror symmetry, in which the helix crosspieces (4) projecting radially from the bottom of the groove (5) to a radius of the circular envelope (H) are made convex in shape and form an undercut (7) with reference to the width of the crosspieces (S), **characterised in that** the bottom of the groove (5) is made concave in shape.

2. Rotary percussion drill bit according to claim 1, **characterised in that** an inner circle (8), which can be inscribed in the helix cross section, has an inner circle radius (I) of a third to two thirds of the radius of the circular envelope (H).

3. Rotary percussion drill bit according to claim 1 or 2, **characterised in that** the undercut is arranged on an undercut radius (R) in the range of a half to two thirds of the radius of the circular envelope (H).

4. Rotary percussion drill bit according to one of claims 1 to 3, **characterised in that** in the helix cross section the bottom of the groove (5) has a radius at the bottom of the groove (N) in the range of a third to two thirds of the radius of the circular envelope (H).

5. Rotary percussion drill bit according to one of claims 1 to 4, **characterised in that** in the helix cross section the width of a radially external edge (B) of the helix crosspiece (4) is in the range of an eighth to a sixth of the radius of the circular envelope (H).

6. Rotary percussion drill bit according to one of claims 1 to 5, **characterised in that** in the helix cross section the helix crosspiece (4) merges radially outwards into an arc of the circular envelope (9).

7. Rotary percussion drill bit according to claim 6, **characterised in that** in the helix cross section a convex shaped side edge (10) is formed between the bottom of the groove (5), which is made concave in shape, and the arc of the circular envelope (9).

8. Rotary percussion drill bit according to claim 7, **characterised in that** in the helix cross section the bottom of the groove (5) merges smoothly into the side edge (10).

9. Rotary percussion drill bit according to claim 6 or 7, **characterised in that** in the helix cross section the side edge (10) has a side edge radius (F) in the range of a quarter to a half of the radius of the circular envelope (H).

10. Rotary percussion drill bit according to one of claims 1 to 9, **characterised in that** a helix gradient ([alpha]) of the helix crosspiece (4) defined in relation to the drill shaft (A) is in the range of 45° to 55°.

## Revendications

1. Foret rotopercutant pour roche pourvu d'une tige hélicoïdale à quatre gorges (3) présentant une section d'hélice à quadruple symétrie de révolution et en miroir, dans lequel les spires d'hélice (4) faisant saillie radialement depuis un fond de gorge (5) jusqu'à un rayon de cercle d'enveloppe (H) sont de forme convexe et forment, du fait de leur largeur de spire (S), une contre-dépouille (7), **caractérisé en ce que** le fond de gorge (5) est de forme concave.

2. Foret rotopercutant selon la revendication 1, **caractérisé en ce qu'**un cercle intérieur (8) inscriptible dans la section d'hélice possède un rayon de cercle intérieur (I) égal à un tiers à deux tiers du rayon de cercle d'enveloppe (H).

3. Foret rotopercutant selon la revendication 1 ou 2, **caractérisé en ce que** la contre-dépouille se trouve sur un rayon de contre-dépouille (R) correspondant à la moitié à deux tiers du rayon de cercle d'enveloppe (H).

4. Foret rotopercutant selon une des revendications 1 à 3, **caractérisé en ce que,** dans la section d'hélice, le fond de gorge (5) possède un rayon de fond de gorge (N) correspondant à un tiers à deux tiers du rayon de cercle d'enveloppe (H).

5. Foret rotopercutant selon une des revendications 1 à 4, **caractérisé en ce que**, dans la section d'hélice, une largeur extérieure radiale de bord (B) de la spire d'hélice (4) correspond à un huitième à un sixième du rayon de cercle d'enveloppe (H).

6. Foret rotopercutant selon une des revendications 1 à 5, **caractérisé en ce que,** dans la section d'hélice, la spire d'hélice (4) se prolonge radialement vers l'extérieur par un arc de cercle d'enveloppe (9).

7. Foret rotopercutant selon la revendication 6, **caractérisé en ce que**, dans la section d'hélice, un bord de flanc de forme convexe (10) est prévu entre le fond de gorge de forme concave (5) et l'arc de cercle d'enveloppe (9).

8. Foret rotopercutant selon la revendication 7, **caractérisé en ce que,** dans la section d'hélice, le fond de gorge (5) se prolonge sans décrochement par le bord de flanc (10).

9. Foret rotopercutant selon la revendication 6 ou 7, **caractérisé en ce que,** dans la section d'hélice, le bord de flanc (10) possède un rayon de bord de flanc (F) correspondant à un quart à la moitié du rayon de cercle d'enveloppe (H).

10. Foret rotopercutant selon une des revendications 1 à 9, **caractérisé en ce qu'**un pas d'hélice (α) de la spire d'hélice (4) défini par rapport à l'axe de forage (A) est compris entre 45° et 55°.
